# EUROPÄISCHE PATENTSCHRIFT

(11) **EP 3 812 248 B1**
(45) Veröffentlichungstag und Bekanntmachung des Hinweises auf die Patenterteilung: **16.08.2023**
(21) Anmeldenummer: 20198100.8
(22) Anmeldetag: 24.09.2020
(51) Int. Cl.: B62D 33/06

(54) **VERFAHREN ZUR AUFNAHME EINER FAHRZEUGKABINE AN EINEM LAND-WIRTSCHAFTLICHEN BASISFAHRZEUG**
METHOD FOR MOUNTING A VEHICLE CAB ON AN AGRICULTURAL BASE VEHICLE
PROCÉDÉ DE LOGEMENT D'UNE CABINE DE VÉHICULE SUR UN VÉHICULE DE BASE AGRICOLE

(30) Priorität: 23.10.2019 DE 102019216335
(43) Veröffentlichungstag der Anmeldung: 28.04.2021
(73) Patentinhaber: Deere & Company, Moline, IL 61265 (US)
(72) Erfinder: Kazimiers, Thilo, 68163 Mannheim (DE); Reif, Markus, 68163 Mannheim (DE)
(74) Vertreter: Dehnhardt, Florian Christopher

(56) Entgegenhaltungen:
- EP-A1- 2 173 581
- JP-U- S5 199 317
- US-A- 4 421 188

## Beschreibung

Die Erfindung betrifft ein Verfahren zur reversiblen Aufnahme einer Fahrzeugkabine an einem landwirtschaftlichen Basisfahrzeug.

Landwirtschaftliche Fahrzeuge, insbesondere Traktoren, werden beim Betriebseinsatz von einem Fahrer manuell gesteuert, teilweise aber auch teilautomatisiert betrieben, beispielsweise mit Unterstützung durch ein Positionserfassungssystem (z.B. GPS). Landwirtschaftliche Fahrzeuge werden deshalb in unterschiedlichen Modi betrieben, siehe zum Beispiel US4421188A.

Der vorliegenden Erfindung liegt die Aufgabe zugrunde, unterschiedliche Betriebsmodi bei landwirtschaftlichen Fahrzeugen kostengünstig zu gestalten.

Diese Aufgabe wird durch ein Verfahren mit den Merkmalen des unabhängigen Patentanspruchs 1 gelöst.

Weitere vorteilhafte Ausgestaltungen des erfindungsgemäßen Verfahrens gehen aus den Unteransprüchen hervor.

Gemäß Patentanspruch 1 wird eine Fahrzeugkabine an einem landwirtschaftlichen Basisfahrzeug reversibel aufgenommen. Dabei weist das landwirtschaftliche Basisfahrzeug eine Tragstruktur (z.B. Chassis, Rahmen, etc.) auf, welche derart ausgebildet ist, dass die Fahrzeugkabine abhängig von einem spezifischen, vorbestimmten Betriebseinsatz wahlweise in einen Aufnahmebereich der Tragstruktur aufgenommen wird oder aus dem Aufnahmebereich der Tragstruktur entfernt wird.

Hierdurch ist die Voraussetzung geschaffen, dass auf eine Fahrzeugkabine bei bestimmten Betriebseinsätzen verzichtet werden kann. Somit kann das Basisfahrzeug bei spezifischen Betriebseinsätzen kostengünstig - nämlich ohne eine Fahrzeugkabine - betrieben werden. Das Basisfahrzeug muss also lediglich dann mit einer Fahrzeugkabine ausgestattet werden, wenn der Betriebseinsatz dieses Fahrzeugs tatsächlich von einem Fahrer aus der Fahrzeugkabine heraus geführt, überwacht und gesteuert werden muss. In anderen Betriebsmodi hingegen, insbesondere einem autonomen Betrieb eines Fahrzeugs kann auf eine Fahrzeugkabine verzichtet werden. In diesem Fall ist das Fahrzeug folglich als Basisfahrzeug ohne Fahrzeugkabine im Betriebseinsatz.

Insbesondere kommen folgende Betriebsmodi für das Basisfahrzeug in Frage:
a) autonome Betätigung ohne Fahrzeugkabine,
b) autonome Betätigung mit Fahrzeugkabine,
c) manuelle Betätigung mit Fahrzeugkabine.

Im Modus a) befinden sich beispielsweise Basisfahrzeuge, welche als Folgefahrzeuge einem Führungsfahrzeug folgen. Das Führungsfahrzeug wird dann vorzugsweise im Modus b) oder c) betrieben, in letzterem Fall wird von einem Fahrer geführt (sog. Platooning). Dies wirkt sich kostensparend insbesondere bei einem Flottenmanagement aus.

Im Modus c) arbeitet das Basisfahrzeug, wenn der Betriebseinsatz verhältnismäßig komplex ist, beispielsweise als Frontlader oder mit einem Kraftheber. In solchen Fällen wird die Fahrzeugkabine auf die Tragstruktur aufgesetzt, so dass die jeweiligen Funktionen des Basisfahrzeuges direkt von der Fahrzeugkabine aus bedient und/oder überwacht werden können.

Ein weiterer Vorteil ist, dass verhältnismäßig kostengünstig mehrere Basisfahrzeuge erworben werden können, ohne dass ein Zwang zum Erwerb einer gleichen Anzahl von Fahrzeugkabinen besteht. Komfortfunktionen für den Fahrer können gezielt in die Fahrzeugkabine implementiert werden. Hierdurch kann Bauraum an der Tragstruktur und Energie (z.B. Kraftstoff) eingespart werden, wenn das Basisfahrzeug ohne Fahrzeugkabine betrieben wird.

In einer bevorzugten Ausführungsform weist das Basisfahrzeug mindestens eine technische Funktion auf, welche unabhängig von einer aufgenommenen Fahrzeugkabine durchgeführt wird. Insbesondere werden sämtliche technische Funktionen des Basisfahrzeugs unabhängig von einer aufgenommenen Fahrzeugkabine durchgeführt. Hierdurch bietet das Basisfahrzeug bei fehlender oder entfernter Fahrzeugkabine die Voraussetzung für einen automatisierten, autonomen oder ferngesteuerten Betrieb. Der Benutzer muss sich folglich nicht im Fahrzeug befinden, sondern kann es extern steuern. Dies bietet dem Benutzer einen verbesserten Gefahrenschutz bei bestimmten Arbeitsvorgängen. Zudem kann das Fahrzeug wegen des niedrigeren Schwerpunktes gefahrloser in schwierigem Gelände eingesetzt werden.

Vorzugsweise wird im Aufnahmebereich der Tragstruktur wahlweise eine Fahrzeugkabine oder eine Funktionseinrichtung aufgenommen. Hierdurch kann der Aufnahmebereich bei entfernter oder nicht genutzter Fahrzeugkabine vorteilhaft für andere Zwecke verwendet werden. Die Funktionseinrichtung können beispielsweise ein Ballastgewicht für die Hinterachsbelastung oder kundenspezifische Aufbauten (z.B. Saatbehälter, Kraftstoffbehälter, andere Tanks, Aggregate) sein. Zusätzliche Behälter im Aufnahmebereich erhöhen vorteilhaft die jeweilige Arbeitskapazität des Basisfahrzeuges. Durch eine Ballastierung im Aufnahmebereich kann auf komplexe Räderballastierungen verzichtet werden. Als Aggregate sind z.B. elektrische Generatoren, zusätzliche Batterien, hydraulische Aggregate ggf. mit einem vergrößerten Volumen des Hydraulikmittels.

Vorzugsweise enthält der Aufnahmebereich der Tragstruktur mindestens eine Kopplungsschnittstelle, welche mit einer Kabinenschnittstelle der aufgenommenen Fahrzeugkabine korrespondiert. Diese Schnittstellen unterstützen eine montagetechnisch einfache, funktionsgerechte und automatische Verbindung (z.B. elektrisch, hydraulisch, Daten, Lenkung, Bremsanlage) zwischen der Fahrzeugkabine und dem Basisfahrzeug. Einzelne Funktionen des Basisfahrzeugs (z.B. Lenkung; Bremsen) können hierdurch ohne zusätzlichen Installationsaufwand von der Fahrzeugkabine aus durchgeführt werden, sobald sie in den Aufnahmebereich der Tragstruktur aufgesetzt worden ist. Die Schnittstellen sind vorzugsweise standardisiert. Sie unterstützen insbesondere eine "x-by-Wire"-Technologie. In einer bevorzugten Ausführungsform einer Schnittstellenfunktion sind die miteinander korrespondierenden Schnittstellen für eine lösbare Arretierung (z.B. hydraulisch, elektromagnetisch) der aufgenommenen Fahrzeugkabine ausgebildet.

Die Fahrzeugkabine wird mit an der Tragstruktur fixierten Hilfsmitteln aufgenommen oder entfernt Für diese Verlegungsbewegungen der Fahrzeugkabine ist an der Tragstruktur eine bewegliche, insbesondere schwenkbewegliche, Hubvorrichtung angeordnet. Mit ihrer Hilfe kann die Fahrzeugkabine montagetechnisch koordiniert aufgenommen und entfernt werden.

Vorzugsweise wird die Hubvorrichtung mittels einer geeigneten Steuervorrichtung angesteuert, um deren Hubbewegungen bezüglich des Aufnahmebereiches zu koordinieren. Eine Steuerung des Aufsetzens bzw. Entfernens der Fahrzeugkabine oder einer Funktionseinrichtung kann direkt am Basisfahrzeug (z.B. mittels einer manuellen Steuerung) oder automatisiert (z.B. App-gesteuert) durchgeführt werden. Dabei ist ein vorbestimmter Betriebseinsatz des Basisfahrzeugs vorzugsweise durch Steuerdaten bzw. Steuersignale repräsentiert, welche in der Steuervorrichtung verarbeitet werden. Abhängig von den Steuerdaten kann die Steuervorrichtung die Bewegungen der Hubvorrichtung steuern.

Vorzugsweise ist die Tragstruktur derart ausgebildet, dass die aufzunehmende Fahrzeugkabine bezüglich einer Längsrichtung des Basisfahrzeugs wahlweise vorwärts, d.h. in Vorwärts-Fahrtrichtung oder rückwärts ausgerichtet werden kann. Mit anderen Worten kann die Fahrzeugkabine immer in Anwendungsrichtung ausgerichtet werden. Alternativ oder zusätzlich kann die Fahrzeugkabine nach der Aufnahme bezüglich einer Kabinen-Hochachse drehbar angeordnet sein, um bedarfsweise in Richtung der Vorwärts-Fahrtrichtung oder in Richtung der Rückwärts-Fahrtrichtung des Basisfahrzeugs ausgerichtet zu werden. Die KabinenHochachse verläuft vorzugsweise parallel zu einer Fahrzeug-Hochachse, welche bei einem horizontalen Fahruntergrund insbesondere vertikal ausgerichtet ist. Die wahlweise Ausrichtung der Fahrzeugkabine und insbesondere ihre Drehbarkeit ermöglicht einen komfortablen und kostensparenden Betrieb des Fahrzeugs im Rückfahrmodus, ohne dass der Innenraum der Fahrzeugkabine bzw. einzelne Funktionen aufwändig für einen Rückfahrmodus konstruiert werden müssen.

Bei dem landwirtschaftlichen Basisfahrzeug handelt es sich beispielsweise um eine Arbeitsmaschine, insbesondere Traktor bzw. Schlepper.

Die beschriebene separate Fahrzeugkabine ermöglicht deren flexible Zuordnung zu einem von mehreren Basisfahrzeugen. Hierdurch kann nach spezifischen Bedingungen entschieden werden, ob das betreffende Basisfahrzeug oder welches Basisfahrzeug eine Fahrzeugkabine benötigt.

Vorzugsweise weist die Fahrzeugkabine eine mit einer Kabinenschnittstelle verbundene Steuereinheit (z.B. Steuergerät, Eingabeeinheit) zur Auslösung einer technischen Funktion des Basisfahrzeugs durch einen Benutzer oder den Fahrer auf. Dabei korrespondiert die Kabinenschnittstelle zur Durchführung der technischen Funktion des Basisfahrzeuges mit einer fahrzeugseitigen Kopplungsschnittstelle. Diese Schnittstellen gewährleisten, dass technische Funktionen des Basisfahrzeuges bei aufgenommener Fahrzeugkabine ohne zusätzlichen Installationsaufwand automatisch mittels der Steuereinheit von einem Benutzer oder Fahrer ausgeführt werden können.

Der kostengünstige Betrieb eines Basisfahrzeugs wirkt sich insbesondere dann vorteilhaft aus, wenn im Rahmen eines Betriebseinsatzes einer Fahrzeugflotte mit mehreren Basisfahrzeugen beispielsweise lediglich ein Führungsfahrzeug mit einem Fahrer eine Fahrzeugkabine benötigt und die restlichen Basisfahrzeuge von dem Führungsfahrzeug ferngesteuert oder autonom geführt werden, so dass diese Basisfahrzeuge als Folgefahrzeuge keine Fahrzeugkabine benötigen. Durch eine "Fahrzeug zu Fahrzeug"-Kommunikation kann das Führungsfahrzeug bzw. dessen Fahrer die Folgefahrzeuge steuern und beim Fahrbetrieb (z.B. Straßenverkehr, Feld) überwachen. Somit kann ein einziger Fahrer mehrere Fahrzeuge zu einem Betriebseinsatzort führen. Am Einsatzort selbst, z.B. auf einem Feld, können hierdurch unterschiedliche Arbeitsvorgänge (z.B. Saatbett-Bereitung, Einsaat, nachfolgendes Oberflächenverdichten) als auch derselbe Arbeitsvorgang automatisiert bzw. autonom in kürzerer Zeit durchgeführt werden. Gleichzeitig ist die anwesende Person des Führungsfahrzeugs ausreichend, um die am Einsatzort aktive Fahrzeugflotte zu überwachen und erforderlichenfalls bei einzelnen Fahrzeugen einzugreifen. Dies können beispielsweise technische Einstellungen an den Fahrzeugen oder Anbaugeräten, Anpassungen der Fahrzeuge an sich ändernde äußere Bedingungen (z.B. Wetter) oder eine Außerbetriebnahme einzelner Fahrzeuge sein. Auch kann die anwesende Person einen Wechsel der Fahrzeugkabine von einem Basisfahrzeug zu einem anderen Basisfahrzeug veranlassen, wenn dies zur Einhaltung der Arbeitsqualität von Vorteil ist.

Eine zeitlich abwechselnde Nutzung einer einzigen Fahrzeugkabine für mehrere Basisfahrzeuge ist auch dann vorteilhaft, wenn hinsichtlich ihrer Anwendung unterschiedliche Basisfahrzeuge zeitlich nacheinander (z.B. bestimmte Zeitpunkte während der Vegetationsperiode oder Rasenpflege im Sommer versus Schneeräumen im Winter) eingesetzt werden und nur das jeweils eingesetzte Basisfahrzeug eine Fahrzeugkabine benötigt.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1a: eine Fahrzeugflotte mit drei Basisfahrzeugen und einer zuzuordnenden Fahrzeugkabine,
- Fig. 1b: die Fahrzeugflotte gemäß Fig. 1a mit der zugeordneten Fahrzeugkabine,
- Fig. 2a: eine Seitenansicht eines Basisfahrzeugs gemäß Fig. 1a und einer aufzunehmenden Fahrzeugkabine,
- Fig. 2b: eine Seitenansicht des Basisfahrzeugs gemäß Fig. 2a während des Vorganges zur Aufnahme der Fahrzeugkabine,
- Fig. 3: eine schematische Darstellung eines Basisfahrzeuges und einer zugeordneten Fahrzeugkabine, und
- Fig. 4: eine schematische Darstellung von Bestandteilen eines Basisfahrzeuges zur Durchführung des erfindungsgemäßen Verfahrens.

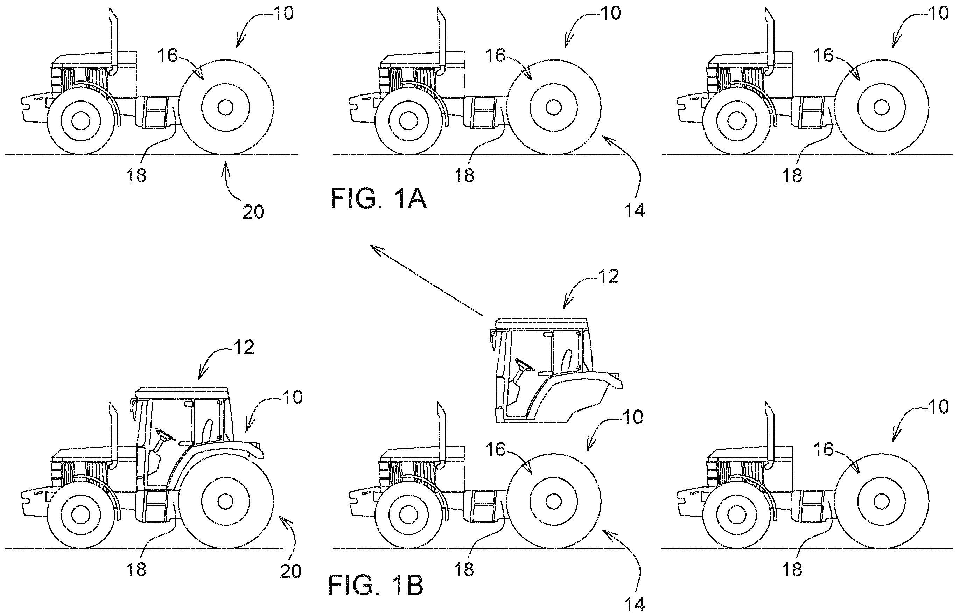

Fig. 1a zeigt drei landwirtschaftliche Basisfahrzeuge 10 in Form von Traktoren jeweils ohne eine Fahrzeugkabine 12. Gemeinsam bilden die drei Basisfahrzeuge 10 eine Fahrzeugflotte 14. Für diese Fahrzeugflotte 14 steht in dem dargestellten Ausführungsbeispiel eine einzige Fahrzeugkabine 12 zur Verfügung.

Abhängig von einem vorbestimmten Betriebseinsatz des betroffenen Basisfahrzeuges 10 wird die Fahrzeugkabine 12 in einen Aufnahmebereich 16 einer Tragstruktur 18 des Basisfahrzeuges 10 wahlweise aufgenommen oder davon entfernt bzw. ferngehalten. In Fig. 1a ist das Basisfahrzeug 10 ganz links als ein Führungsfahrzeug bzw. Leitfahrzeug 20 ausgewählt. Diesem Führungsfahrzeug 20 wird die Fahrzeugkabine 12 zugeordnet.

Mindestens einige der technischen Funktionen (z.B. Lenken, Bremsen) des Basisfahrzeuges 10 sind auch ohne eine aufgenommene Fahrzeugkabine 12 durchführbar. Insoweit können bei jedem dem Führungsfahrzeug 20 folgenden Basisfahrzeug 10 auch die technischen Funktionen des Führungsfahrzeugs 20 durchgeführt werden, beispielsweise automatisiert, autonom oder ferngesteuert.

In den Aufnahmebereich 16 kann wahlweise eines Fahrzeugkabine 12 oder eine hier nicht dargestellte Funktionsvorrichtung (z.B. Vorratsbehälter, Tank, technisches Aggregat) aufgenommen werden.

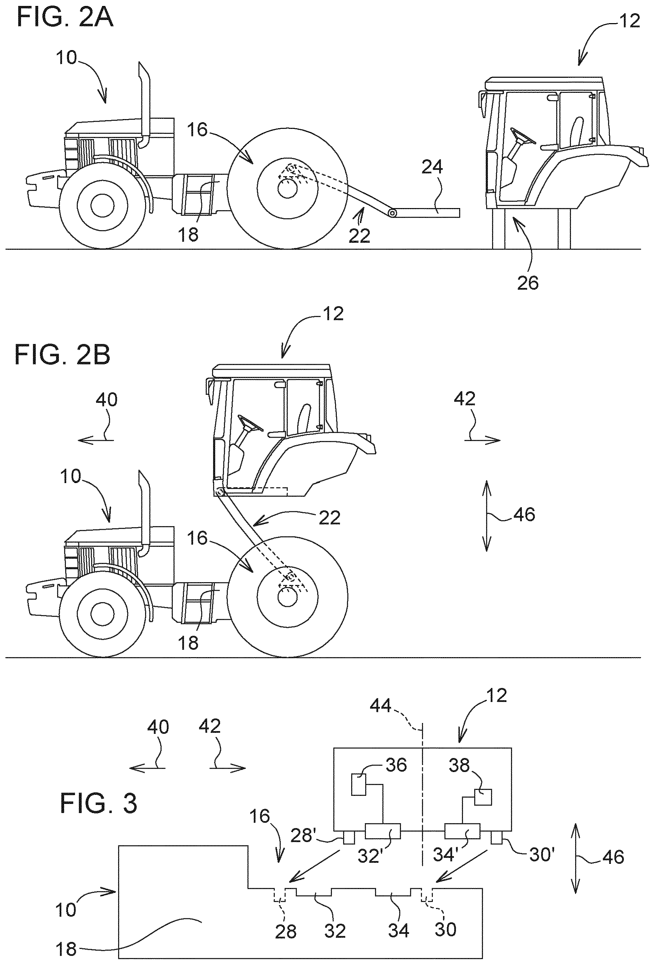

An der Tragstruktur 18 ist eine schwenkbewegliche und mehrarmige Hubvorrichtung 22 gelagert. Sie dient einer Aufnahme der Fahrzeugkabine 12. Hierzu wird das Basisfahrzeug 10 zunächst an die Fahrzeugkabine 12 herangefahren (Fig. 2a). Dann fixiert ein Freiende 24 der Hubvorrichtung 22 die an einem Lagergestell 26 gelagerte Fahrzeugkabine 12. Daraufhin wird die Fahrzeugkabine 12 in den Aufnahmebereich 16 hineingehoben (Fig. 2b). Entsprechend wird die Fahrzeugkabine 12 mittels der Hubvorrichtung 22 wieder vom Basisfahrzeug 10 entfernt.

Fig. 3 zeigt schematisch das Basisfahrzeug 10 und eine korrespondierende Fahrzeugkabine 12. Der Aufnahmebereich 16 der Tragstruktur 18 des Basisfahrzeugs 10 weist vier Kopplungsschnittstellen 28, 30, 32, 34 auf, welche mit entsprechenden Kabinenschnittstellen 28', 30', 32', 34' gekoppelt werden. Die Schnittstellen 28, 28', 30, 30' bewirken eine lösbare Arretierung (z.B. mechanisch, hydraulisch, elektromagnetisch) der Fahrzeugkabine 12 an der Tragstruktur 18. Die Schnittstellen 32, 32', 34, 34' hingegen betreffen technische Funktionen des Basisfahrzeuges 10, welche bei aufgenommener Fahrzeugkabine 12 über mit den Kabinenschnittstellen 32', 34' verbundene Steuereinheiten 36, 38 von einem Benutzer aus der Fahrzeugkabine 12 heraus ausgeführt werden können.

Die Tragstruktur 18 ist derart ausgebildet, dass die Fahrzeugkabine 12 wahlweise für eine Vorwärts-Fahrtrichtung 40 oder für eine Rückwärts-Fahrtrichtung 42 des Basisfahrzeugs 10 ausgerichtet aufnehmbar ist. Zusätzlich kann die aufgenommene Fahrzeugkabine 12 bezüglich einer Kabinenhochachse 44 an der Tragstruktur 18 drehbar gelagert sein. Hierzu weist die Fahrzeugkabine 12 eine geeignete Konstruktion auf, welche sowohl deren lösbare Arretierung als auch deren Drehbarkeit bezüglich der Tragstruktur 18 ermöglicht.

Die Kabinenhochachse 44 verläuft parallel zu einer Fahrzeughochachse 46 des Basisfahrzeugs 10. Die vorgenannte Drehbarkeit der Fahrzeugkabine 12 ermöglicht deren benutzerfreundliche Ausrichtung sowohl für eine Vorwärtsfahrt als auch für eine Rückwärtsfahrt des Basisfahrzeugs 10.

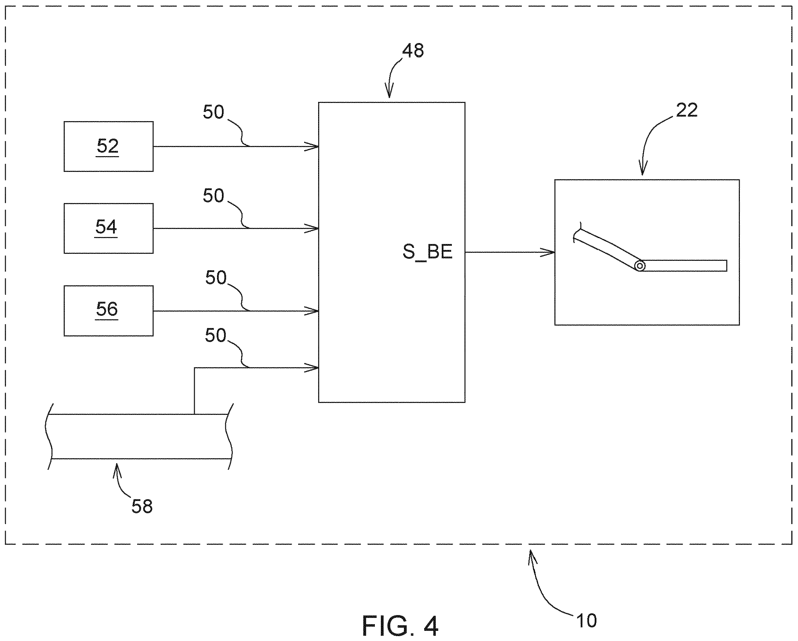

Fig. 4 zeigt schematisch einzelne Bestandteile des Basisfahrzeugs 10 für eine Ansteuerung der Hubvorrichtung 22. Letztere wird durch eine Steuervorrichtung 48 in Abhängigkeit von einem vorbestimmten Betriebseinsatz des Basisfahrzeugs 10 angesteuert, um die Fahrzeugkabine 12, wie bereits beschrieben, aufzunehmen oder zu entfernen. Der vorbestimmte Betriebseinsatz des Basisfahrzeugs 10 ist durch Steuerdaten bzw. Steuersignale S_BE repräsentiert, welche in der Steuervorrichtung 48 verarbeitet werden. Abhängig von den Steuerdaten S_BE wird die Hubvorrichtung 22 von der Steuervorrichtung 48 bewegungsgesteuert.

Die Steuerdaten bzw. Steuersignale S_BE werden in Abhängigkeit von Eingangsdaten 50 an der Steuervorrichtung 48 generiert. Die Eingangsdaten 50 werden beispielsweise vom Fahrer bzw. Benutzer über eine Benutzerschnittstelle 52 vorgegeben. Alternativ oder zusätzlich werden die Eingangsdaten 50 durch eine fahrzeugseitige Sensorik 54 und/oder eine Datenschnittstelle 56 und/oder ein Bussystem 58 des Basisfahrzeugs 10 vorgegeben. Die Datenschnittstelle 56 ist zur Signalübermittlung von einer externen Signalquelle (z.B. Fernsteuerung, mobile Telekommunikationsverbindung) ausgebildet.

## Patentansprüche

1. Verfahren zur reversiblen Aufnahme einer Fahrzeugkabine an einem landwirtschaftlichen Basisfahrzeug (10) mit einer Tragstruktur (18), welche derart ausgebildet ist, dass die Fahrzeugkabine (12) abhängig von einem vorbestimmten Betriebseinsatz (S_BE) des Basisfahrzeuges (10) wahlweise in einen Aufnahmebereich (16) der Tragstruktur (18) aufgenommen oder aus dem Aufnahmebereich (16) der Tragstruktur (18) entfernt wird, um das Basisfahrzeug (10) ohne Fahrzeugkabine (12) zu betreiben, wobei an der Tragstruktur (18) eine bewegliche Hubvorrichtung (22) zum Aufnehmen und/oder Entfernen der Fahrzeugkabine (12) angeordnet ist.

2. Verfahren nach Anspruch 1, **dadurch gekennzeichnet, dass** mindestens eine technische Funktion des Basisfahrzeugs (10) unabhängig von einer aufgenommenen Fahrzeugkabine (12) durchgeführt wird.

3. Verfahren nach einem der vorhergehenden Ansprüche, **dadurch gekennzeichnet, dass** im Aufnahmebereich (16) wahlweise eine Fahrzeugkabine (12) oder eine Funktionsvorrichtung aufgenommen wird.

4. Verfahren nach einem der vorhergehenden Ansprüche, **dadurch gekennzeichnet, dass** der Aufnahmebereich (16) der Tragstruktur (18) mindestens eine Kopplungsschnittstelle (28, 30, 32, 34) zur Kopplung mit mindestens einer Kabinenschnittstelle (28', 30', 32', 34') der Fahrzeugkabine (12) aufweist.

5. Verfahren nach Anspruch 1, **dadurch gekennzeichnet, dass** der vorbestimmte Betriebseinsatz durch Steuerdaten (S_BE) repräsentiert ist und die Hubvorrichtung (22) in Abhängigkeit von den Steuerdaten (S_BE) bewegungsgesteuert wird.

6. Verfahren nach einem der vorhergehenden Ansprüche, **dadurch gekennzeichnet, dass** die Tragstruktur (18) derart ausgebildet ist, dass die Fahrzeugkabine (12)
- wahlweise für eine Vorwärts-Fahrtrichtung (40) oder eine Rückwärts-Fahrtrichtung (42) des Basisfahrzeugs (10) ausgerichtet aufgenommen wird, und/oder
- nach der Aufnahme drehbar angeordnet ist.

## Claims

1. Method for receiving a vehicle cab in a reversible manner on an agricultural base vehicle (10) having a supporting structure (18) which is configured such that the vehicle cab (12) is selectively received in a receiving region (16) of the supporting structure (18) or removed from the receiving region (16) of the supporting structure (18) as a function of a predetermined operation (S_BE) of the base vehicle (10), in order to operate the base vehicle (10) without a vehicle cab (12), wherein a movable lifting device (22) for receiving and/or removing the vehicle cab (12) is arranged on the supporting structure (18).

2. Method according to Claim 1, **characterized in that** at least one technical function of the base vehicle (10) is performed independently of a received vehicle cab (12) .

3. Method according to either of the preceding claims, **characterized in that** a vehicle cab (12) or a functional device is selectively received in the receiving region (16) .

4. Method according to one of the preceding claims, **characterized in that** the receiving region (16) of the supporting structure (18) has at least one coupling interface (28, 30, 32, 34) for coupling to at least one cab interface (28', 30', 32', 34') of the vehicle cab (12) .

5. Method according to Claim 1, **characterized in that** the predetermined operation is represented by control data (S_BE) and the lifting device (22) is controlled in terms of movement as a function of the control data (S_BE).

6. Method according to one of the preceding claims, **characterized in that** the supporting structure (18) is configured such that the vehicle cab (12)
- is received so as to be selectively oriented for a forward direction of travel (40) or a rearward direction of travel (42) of the base vehicle (10), and/or
- is rotatably arranged after being received.

## Revendications

1. Procédé de réception réversible d'une cabine de véhicule sur un véhicule agricole de base (10) avec une structure porteuse (18) qui est configurée de telle sorte que la cabine de véhicule (12), en fonction d'une utilisation de service (S_BE) prédéfinie du véhicule de base (10), est au choix reçue dans une zone de réception (16) de la structure porteuse (18) ou retirée de la zone de réception (16) de la structure porteuse (18), pour faire fonctionner le véhicule de base (10) sans cabine de véhicule (12), un dispositif de levage mobile (22) étant agencé sur la structure porteuse (18) pour recevoir et/ou retirer la cabine de véhicule (12).

2. Procédé selon la revendication 1, **caractérisé en ce qu'**au moins une fonction technique du véhicule de base (10) est exécutée indépendamment d'une cabine de véhicule (12) reçue.

3. Procédé selon l'une quelconque des revendications précédentes, **caractérisé en ce que** la zone de réception (16) reçoit au choix une cabine de véhicule (12) ou un dispositif fonctionnel.

4. Procédé selon l'une quelconque des revendications précédentes, **caractérisé en ce que** la zone de réception (16) de la structure porteuse (18) présente au moins une interface de couplage (28, 30, 32, 34) pour le couplage avec au moins une interface de cabine (28', 30', 32', 34') de la cabine de véhicule (12).

5. Procédé selon la revendication 1, **caractérisé en ce que** l'utilisation de service prédéterminée est représentée par des données de commande (S_BE) et le dispositif de levage (22) est commandé en mouvement en fonction des données de commande (S_BE).

6. Procédé selon l'une quelconque des revendications précédentes, **caractérisé en ce que** la structure porteuse (18) est configurée de telle sorte que la cabine de véhicule (12)
- au choix est reçue en étant orientée pour une direction de déplacement vers l'avant (40) ou une direction de déplacement vers l'arrière (42) du véhicule de base (10), et/ou
- est agencée de manière rotative après la réception.
